**Europäisches Patentamt**

**European Patent Office**

**Office européen des brevets**

(11) Veröffentlichungsnummer: **0 026 734**

**A1**

# (12) EUROPÄISCHE PATENTANMELDUNG

(21) Anmeldenummer: **80730065.2**

(22) Anmeldetag: **25.09.80**

(51) Int. Cl.³: **G 06 F 11/16**

(30) Priorität: **28.09.79 DE 2939935**

(43) Veröffentlichungstag der Anmeldung:
**08.04.81 Patentblatt 81/14**

(84) Benannte Vertragsstaaten:
**AT BE DE IT LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Lotz, Alfred, Ing.-grad.**
**Büchsenweg 14**
**D-1000 Berlin 51(DE)**

(72) Erfinder: **Kraffel, Burkhardt, Ing.-grad.**
**Sarrazinstrasse 25**
**D-1000 Berlin 41(DE)**

(74) Vertreter: **Schickle, Gerhard, Dipl.-Ing. et al,**
**Licentia Patent-Verwaltungs-GmbH Theodor-Stern-Kai**
**1**
**D-6000 Frankfurt/Main 70(DE)**

(54) Sichere Datenverarbeitungseinrichtung.

(57) Die Erfindung betrifft eine sichere Datenverarbeitungseinrichtung mit in mindestens zwei Kanälen dieselben Informationen verarbeitenden Schaltwerken, die schrittweise gesteuert werden. Die Erfindung besteht darin, daß in jedem Kanal eine BUS-Leitung enthalten ist. An jede BUS-Leitung ist ein unabhängig arbeitender Mikroprozessor, ein Schreib-Lese-Speicher, ein Festwertspeicher, ein Past-Memory-Baustein, eine Parallelausgabe- und eine Serielldatenausgabeschaltung angeschlossen. Die BUS-Leitungen sind durch eine fehlersichere Koordinierungseinheit miteinander verbunden, welche die Übernahme und Ausgabe der Informationen steuert. Wahlweise sind parallele, serielle oder bereits gesicherte Informationen eingebbar. Wahlweise sind gesicherte parallele oder serielle Informationen ausgebbar. Lediglich die Koordinierungseinheit, die Vergleicher, die Takt- und Synchronisationseinheit und die bitparallele bzw. bitserielle Ausgabe in den Datenausgabeschaltungen sind sichere Bausteine. Jeder Mikroprozessor ist für sich unabhängig gesteuert. Die Koordinierungseinheit gibt nach dem Eintreffen der Vergleichsergebnisse einen Befehl zur Abarbeitung des nächsten Programmschritts oder zur Wiederholung des Programmschritts oder zur Stillsetzung aus. Die Kanäle sind modular aufgebaut. Mehrere dieser Sicherheitsausgabeschaltungen sind zu einem Multiprozessingsystem verbindbar.

./...

Sichere Datenverarbeitungseinrichtung

Die Erfindung bezieht sich auf eine sichere Datenverarbeitungseinrichtung nach dem Oberbegriff des Patentanspruchs 1.

Bei der Steuerung von technischen Prozessen werden immer mehr elektronische Einrichtungen eingesetzt, insbesondere Prozeßrechner und Mikrocomputer. Das geschieht auch auf so sicherheitsempfindlichen Gebieten wie z. B. der Eisenbahn-Sicherungstechnik, bei Verkehrsampelsteuerungen, Walzstrassensteuerwerken, Pressensteuerungen, Kernreaktorüberwachung usw. Dabei ist es besonders wichtig, daß keine Menschenleben gefährdet werden. In allen diesen Fällen ist daher das fail-safe Prinzip anzuwenden, d. h., daß auch bei Störungen oder Fehlern in den Steuerungswerken keine Signale abgegeben werden dürfen, welche für Menschen oder Maschinen schädliche Folgen haben könnten. Trotzdem soll ein zu grosser Aufwand vermieden werden und daher weitgehend handelsübliche Bauteile verwendet werden.

Es ist schon eine Sicherheitsausgabeschaltung für eine Binärsignale abgebende Datenverarbeitungsanlage unter Verwendung eines Verstärkers mit einem Ausgangsübertrager, dessen Sekundärwicklung über eine Gleichrichterschaltung einen Verbraucher mit Fail-Safe-Signalen versorgt, bekannt. Von einem Paar Datenleitungen, die gleichartige Binärsignale zweier durch eine gemeinsame Taktstromversorgung taktsynchron gesteuerter Mikrocomputer führen, ist jede der Datenleitungen an ein als Ausgabebaustein dienendes erstes Kippglied angeschlossen, dessen Ausgang mit dem Rücksetzeingang eines zweiten Kippgliedes verbunden ist, für die beiden zweiten Kippglieder sind synchrone Taktpulse aus der Taktstromversorgung vorgesehen, ein Rücksetzeingang des einen bzw. anderen ersten Kippgliedes ist mit einem ein Grundstellungssignal abgebenden Ausgang der Taktstromversorgung verbunden, an den Ausgang des einen zweiten Kippgliedes und an den negierten Ausgang des anderen zweiten Kippgliedes ist ein durch Testimpulse der Taktstromversorgung abfragbares Antivalenz-Überwachungsglied angeschlossen, das die Testimpulse sowohl bei statischen als auch bei dynamischen antivalenten Signalen zur Aufrechterhaltung der Taktstromversorgung ausgibt, der Verstärker ist an mindestens eines der beiden zweiten Kippglieder angeschlossen (DE-AS 26 51314).

Diese Einrichtung hat jedoch den Nachteil, daß sich z. B. Störungen in der Taktsteuerung auf beide Mikroprozessoren gleichmäßig auswirken. Ebenso können systematische Fehler in den beiden aus gleichen Komponenten aufgebauten Kanälen sich gleichmäßig auswirken, so daß u. U. noch ein falscher Befehl ausgegeben werden kann.

Die Aufgabe besteht daher darin, eine sichere Datenverarbeitungseinrichtung zu schaffen, bei der alle Fehler, die nicht zufällig gleichzeitig und in der gleichen Art in jedem Kanal auftreten, erkannt werden können, so daß die Ausgabe eines falschen Befehls verhindert werden kann. Die Aufgabe wird nach der Erfindung durch die in den Patentansprüchen angegebenen Merkmale gelöst.

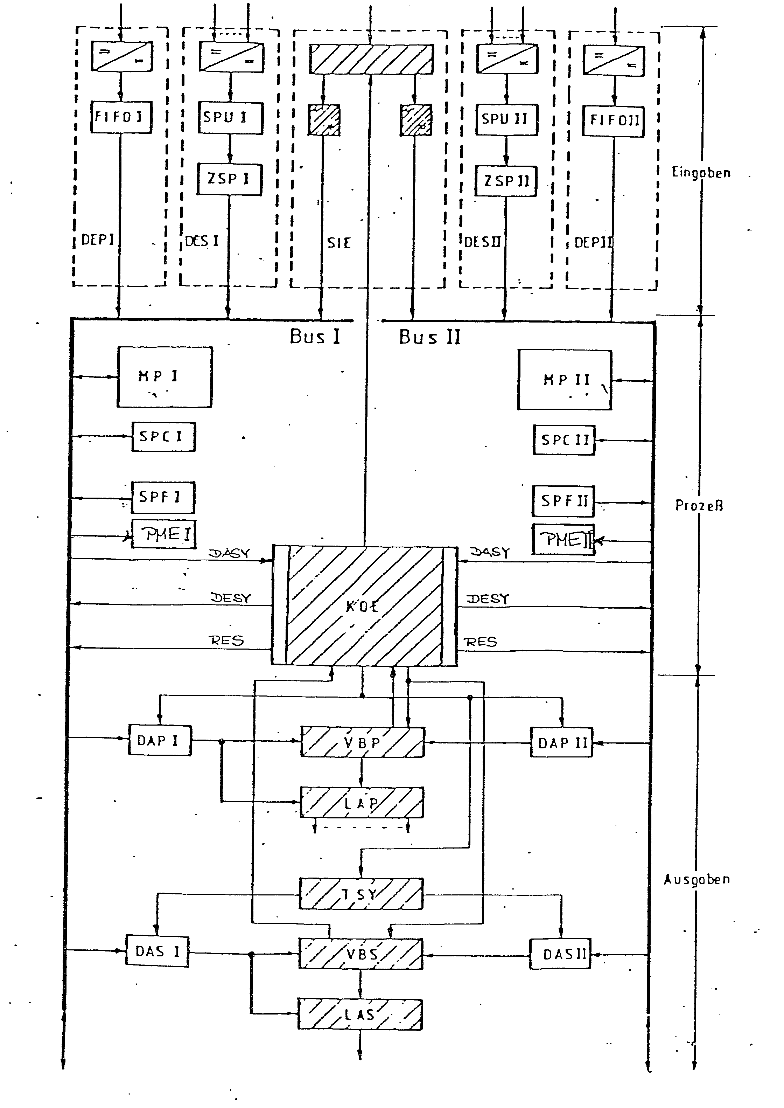

Die Erfindung wird im folgenden anhand eines Ausführungsbeispieles näher erläutert. In dem in der Zeichnung dargestellten Ausführungsbeispiel besteht die Einrichtung nach der Erfindung aus 2 Kanälen, jedoch können aus Sicherheitsgründen auch 3 oder mehr Kanäle vorgesehen werden. Ebenso ist es möglich, eine solche Einrichtung mit einer weiteren oder mehreren zu einem multiprocessingsystem zu verbinden.

Beim Ausführungsbeispiel sind 2 Kanäle I und II in ihrer Struktur vollkommen gleich aufgebaut, können aber hardwaremäßig verschieden sein, so daß es ausreicht, nur einen zu beschreiben. An einem BUS liegen eine digitale Eingabeschaltung DEP, in welche die Informationen bitparallel eingespeist werden, oder eine digitale Eingabeschaltung DES, in welche die Information bitseriell eingespeist wird, oder eine sichere Eingabeschaltung SIE, in welche die Information bereits in gesicherter Form eingespeist wird (diese ist offenbart in der Patentanmeldung P 24 o2 88o).

Als digitale Eingabeschaltung dient zunächst die Eingabeschaltung DEP für bitparalleles Einlesen. Ein z. B. 8 bit breites Datenwort wird über Opto-Koppler getrennt in einen Zwischenspeicher FIFO eingelesen. Ein FIFO auf der Eingabe DEP ist ein Bauelement, mit dem Eingangsdaten und Ausgangsdaten voneinander entkoppelt werden können. Das bedeutet, daß man gleichzeitig Daten auslesen kann, während Daten in dieses Bauelement eingelesen werden. Dabei werden zunächst

**0026734**

die Daten wieder ausgelesen, die zuerst eingelesen worden sind.

Eine weitere Eingabeschaltung DES ist eine bitserielle Eingabeschaltung. Auch hier wird die Eingabeinformation zunächst über Opto-Koppler galvanisch getrennt und anschliessend in einen Serien-Parallelumsetzer SPU zwischengespeichert. Das Ergebnis aus dem Serienparallelumsetzer wird nach Beendigung des Einschreibevorganges in einen Zwischenspeicher ZSP übernommen und steht dann dem Prozeß zur Verfügung.

Die bitparallelen bzw. bitseriellen Eingaben DEP, DES sind doppelt aufgebaut und sie müssen auch doppelt vom Prozeß angesteuert werden. Nur dadurch ist es möglich, daß man Leitungsunterbrechungen bzw. EMC-Störungen erkennen kann, die dann zu keinem falschen Ergebnis führen können.

Die dritte Eingabeschaltung ist eine aus Festbauelementen aufgebaute Gruppe, die sichere Eingabeschaltung SIE. Hier können sichere Kontakte, Relais- oder Steuerkontakte angeschlossen werden.

Die Eingänge werden auf Antivalenz oder Valenz überprüft und rückkopplungsfrei auf beide BUSSE verteilt. Die Eingabedaten werden entweder zyklisch eingegeben, per Programm gesteuert oder es wird für eine kurze Zeit ein interrupt zugelassen, so daß auch spontane Eingaben erfaßt werden können.

An den BUS ist ferner angeschlossen ein Mikroprozessor MP, ein Schreib-/Lesespeicher SPC, ein Festwertspeicher SPF, ein Pastmemorybaustein PME, eine digitale Ausgabeschaltung DAP, über welche die Ausgabe eines Befehls bitparallel erfolgt, und eine digitale Ausgabeschaltung DAS, über welche die Ausgabe eines Befehls bitseriell erfolgt. Die bisher genannten Bausteine sind bis auf die sichere Eingabeschaltung SIE handelsübliche Erzeugnisse und nicht in sich fehlergeschützt.

Die Koordinierung des Verarbeitungsablaufs und die Sicherung der ausgegebenen Informationen erfolgt durch eine Koordinierungseinheit KOE, die in sich fehlergeschützt ist, sowie durch sichere Vergleicherbaugruppen VBP, VBS. In sich fehlergeschützt sind auch eine Ausgabe LAP in der bitparallelen Ausgabeschaltung sowie eine Takt- und Synchronisationsbaugruppe TSY und eine Ausgabe LAS in der digitalen Ausgabeschaltung für serielle Befehle.

Beide Mikroprozessoren arbeiten mit eigenen Taktversorgungen und werden von ihrem Takt her nicht zwangssynchronisiert. Das führt dazu, daß keine EMC-Störungen zu gleichzeitigen Verfälschungen führen können, die nicht im Vergleich erkannt werden. Die Eingabeinformationen können auch von einer Quelle kommen. Allerdings muß die Verbindung immer zweiseitig ausgeführt werden, um Leitungsunterbrechungen oder -schlüsse oder Störeinstrahlungen zu registrieren und festzustellen.

Zu den Prozessoren MP I, MP II gehören die Speicherkomponenten, wie Festwertspeicher SPF I, SPF II und Schreib-/Lesespeicher SPC I, SPC II. Die Prozessoren sind galvanisch getrennt und haben keine Verkopplung untereinander.

Die Steuerung bzw. die Übernahme der Kontaktinformationen wird von der Koordinierungseinheit KOE gesteuert. Sie hat die Aufgabe, die Programmgeschwindigkeit beider Prozessoren auf gleiche Zeitabschnitte zu bringen, weiterhin die digitalen Eingaben DESY zu synchronisieren, damit beide Rechner zur gleichen Zeit identische Informationen bekommen und die digitale Ausgabe DASY zu steuern, damit an den Vergleichern VBP, VBS, sei es nun bitparallel oder bitseriell zu jeder Zeit identische Informationen anstehen.

Ein Programm wird in viele Einzelsegmente aufgeteilt. Nach jedem kurzen Programmabschnitt findet ein Vergleich statt, d. h., der Prozessor gibt die Vorgaben an irgendeine Ausgabeeinheit und meldet sich im Anschluß daran bei der Koordinierungseinheit, daß Daten zur Verfügung stehen. Ist der zweite Prozessor in dieser Zeit noch nicht mit seiner Ausgabe fertig, wird der erste Prozessor angehalten und er muß so lange warten, bis auch der zweite Prozessor mit seiner Ausgabe fertig ist. Durch diese Maßnahme kann man eine Zwangssynchronisierung beider Prozessoren erreichen.

Weiterhin wird auch durch ein Zeitglied in der Koordinierungseinheit überprüft, ob beide Prozessoren sich in bestimmten Zeitabständen bei der Koordinierungseinheit melden. Ist dieser Abstand zu groß, so werden beide Prozessoren angehalten und eine Fehlermeldung wird ausgegeben.

Wenn ein Mikroprozessor bzw. beide Mikroprozessoren ihre Daten an eine digitale Ausgabebaugruppe abgegeben haben und beide sich bei der Koordinierungseinheit gemeldet haben, initialisiert die Koordinierungseinheit einen Impuls, der das Ergebnis des Ladens in ein zweites Register übernimmt. Durch diese Übernahme der Daten synchron in beide Speicher an beiden BUSSEN stehen an den Vergleichern immer gleiche identische Informationen an. Die Prozessoren können den nächsten Programmschritt ohne weiteren Befehl abarbeiten. Tritt ein Fehlerfall auf, so werden nur die fehlerhaften Informationen unterbunden. Diese Aussage trifft nur auf die bitparallelen Ausgaben zu, nicht für die bitseriellen, denn hier wird das gesamte Telegramm bei einem Fehlerfall unterbunden.

Das System zeichnet sich dadurch aus, daß beide Prozessoren gleichartig oder verschiedenartig sein können. Weiterhin besteht die Möglichkeit, daß in beiden Prozessoren sowohl identische Software-Programme ablaufen können wie auch unterschiedliche Software-Programme oder aber, daß zwei unterschiedliche Software-Programme nacheinander in einem Prozessor verarbeitet werden können.

Es ist auch möglich, das System auf ein m- von n-System aufzuweiten, um neben der Sicherheit noch eine Erhöhung der Verfügbarkeit zu erzielen.

Als Ausgabebaugruppen stehen zwei Elemente zur Verfügung. Zunächst die parallele Ausgabeschaltung DAP. Hier wird das 8 bit breite Datenwort in einen Speicher eingelesen. Das Ergebnis wird in einen zweiten Zwischenspeicher übernommen, gesteuert von der Koordinierungseinheit.

Außerdem existiert noch eine digitale Ausgabeschaltung DAS für serielle Informationen. Diese serielle Ausgabegruppe besteht aus einem Parallelregister, das von dem Prozessor entsprechend der Telegramm- oder bit-Länge geladen wird. Ist das Register komplett geladen, wird die Information in ein zweites Register mit Hilfe der Koordinierungseinheit übernommen.

Die Ausgänge der digitalen Ausgabeschaltungen DAP, DAS werden auf Vergleicher VBP, VBS geführt. Dort wird die Information beider Ausgänge überprüft. Das Ergebnis wird einerseits durchgeschaltet an die Ausgabegruppe LAP, die aus LOGISAFE-Bausteinen besteht.

Bei der seriellen Ausgabegruppe wird das serielle Wort bit für bit verglichen. Das Austakten dieses Wortes übernimmt eine Baugruppe Takt bzw. die Synchronisation TSY, die die Übertragungsrate des seriellen Datenwortes bestimmt. Die Dateninformation wird über eine gesicherte Ausgabe LAS aus LOGISAFE-Bausteinen fortgeschaltet.

Der Ausgang der gesicherten Baugruppe LAS wird zur sicheren Fernübertragung benutzt. Die Ausgänge der gesicherten Baugruppe LAP für ein 8 bit breites paralles Wort können über gesicherte Verstärker Relais oder Stellglieder ansteuern.

Das ganze System ist modular aufgebaut. Die Koordinierungseinheit muß nur einmal vorhanden sein. Für den Service, für das Aufsuchen von Fehlern ist ein Pastmemory PME vorgesehen. Darin werden bei Auftreten eines Fehlers die letzten 256 bits der Programmverarbeitung festgehalten. Es werden sowohl Daten wie Adressen und auch einige wichtige Kontrollleitungen gespeichert. Diese Baugruppe ist für jeden Prozessor getrennt vorhanden, so daß man die Ungleichheit der Informationen, also einen Fehler leicht orten kann.

- - - - - - - -

**0026734**

LEGENDE
=======

|      |                                         |
|------|-----------------------------------------|
| DAP  | Digitale Ausgabe bitparallel            |
| DAS  | Digitale Ausgabe bitseriell             |
| DASY | Digitale Synchronisier – Ausgabe        |
| DEP  | Digitale Eingabe bitparallel            |
| DES  | Digitale Eingabe bitseriell             |
| DESY | Digitale Synchronisier – Eingabe        |
| FIFO | First-in First-out Speicher             |
| KOE  | Koordinierungseinheit                   |
| LAP  | LOGISAFE-Ausgabe bitparallel            |
| LAS  | LOGISAFE-Ausgabe bitseriell             |
| MP   | Mikroprozessor                          |
| PME  | Pastmemory                              |
| RES  | Reset                                   |
| SIE  | Sichere Eingabe                         |
| SPC  | Schreib-/ Lesespeicher in CMOS-Technik  |
| SPF  | Festwertspeicher                        |
| SPU  | Serien – Parallel – Umsetzer            |
| TSY  | Takt und Synchronisation                |
| VBP  | Vergleicherbaugruppe bitparallel        |
| VBS  | Vergleicherbaugruppe bitseriell         |
| ZSP  | Zwischenspeicher                        |

– – – – – – –

Patentansprüche

1. Sichere Datenverarbeitungseinrichtung mit in mindestens zwei Kanälen dieselben Informationen verarbeitenden Schaltwerken, die schrittweise gesteuert werden, gekennzeichnet durch folgende Merkmale:

in jedem Kanal ist eine BUS-Leitung (BUS I, BUS II) enthalten,

an jede BUS-Leitung (BUS I, BUS II) ist ein unabhängig arbeitender Mikroprozessor (MP I, MP II), ein Schreiblesespeicher (SPC I, SPC II), ein Festwertspeicher (SPF I, SPF II) und ein Pastmemorybaustein (PME I, PME II) angeschlossen,

an jede BUS-Leitung (BUS I, BUS II) ist eine Paralleldatenausgabe- (DAP I, DAP II, VBP, LAP) und eine Serielldatenausgabeschaltung (DAS I, DAS II, TSY, VBS, LAS) angeschlossen,

die BUS-Leitungen (BUS I, BUS II) sind durch eine fehlersichere Koordinierungseinheit (KOE) miteinander verbunden, welche die Übernahme und Ausgabe der Informationen steuert.

- 2 -

2. Sichere Datenverarbeitungseinrichtung nach Anspruch 1, dadurch gekennzeichnet, daß wahlweise parallele, serielle oder bereits gesicherte Informationen eingebbar sind.

3. Sichere Datenverarbeitungseinrichtung nach den Ansprüchen 1 und 2, dadurch gekennzeichnet, daß wahlweise gesicherte parallele oder serielle Informationen ausgebbar sind.

4. Sichere Datenverarbeitungseinrichtung nach den Ansprüchen 1 bis 3, dadurch gekennzeichnet, daß lediglich die Koordinierungseinheit (KOE), die Vergleicher (VBP, VBS), die Takt- und Synchronisationseinheit (TSY) und die bitparallele bzw. bitserielle Ausgabe (LAP, LAS) in den Datenausgabeschaltungen sichere Bausteine sind.

5. Sichere Datenverarbeitungseinrichtung nach den Ansprüchen 1 bis 4, dadurch gekennzeichnet, daß jeder Mikroprozessor (MP I, MP II) für sich unabhängig taktgesteuert ist.

6. Sichere Datenverarbeitungseinrichtung nach den Ansprüchen 1 bis 5, dadurch gekennzeichnet, daß die Koordinierungseinheit (KOE) nach dem Eintreffen der Vergleichsergebnisse einen Befehl zur Abarbeitung des nächsten Programmschritts oder zur Wiederholung eines Programmschritts oder zur Stillsetzung ausgibt.

7. Sichere Datenverarbeitungseinrichtung nach den Ansprüchen 1 bis 6, dadurch gekennzeichnet, daß die Kanäle modular aufgebaut sind.

8. Sichere Datenverarbeitungseinrichtung nach den Ansprüchen 1 bis 7, dadurch gekennzeichnet, daß mehrere dieser Sicherheitsausgabeschaltungen zu einem multiprocessing-system verbindbar sind.

## EUROPÄISCHER RECHERCHENBERICHT

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | FR - A - 2 144 912 (CO. D'ETUDES ET DE REALISATION DE CYBERNETIQUE INDUSTRIELLE)<br><br>* Seite 3, Zeile 7 bis Seite 4, Zeile 27; Abbildungen *<br><br>-- | 1,5,6 | **G 06 F 11/16** |
| | DE - A - 2 458 224 (SIEMENS)<br><br>* Seite 1 bis Seite 9, Zeile 11; Seite 13, Zeile 17 bis Seite 14, Zeile 4; Seite 30, Zeilen 1-9 *<br><br>-- | 1,5,6,8 | |
| | FR - A - 2 345 766 (SIEMENS)<br><br>* Seite 9, Zeile 18 bis Seite 13, Zeile 28; Figur 1 *<br><br>-- | 1 | **RECHERCHIERTE SACHGEBIETE (Int. Cl.³)**<br><br>G 06 F 11/16<br> 11/20 |
| | US - A - 4 030 074 (GIORCELLI)<br><br>* Zusammenfassung *<br><br>-- | 1 | |
| | PROCEEDINGS OF THE ANNUAL SYMPOSIUM ON COMPUTER ARCHITECTURE, University of Florida, 9-11 Dezember 1973, New York, US, FISCHLER: "A fault tolerant multi-processor architecture for real-time control applications", Seiten 151-156<br><br>* Seite 152, Spalten 1,2; Seite 153, Spalte 2, Zeilen 52-61 *<br><br>-- | 1,5 | |
| A | DE - A - 2 817 757 (INTERNATIONAL STANDARD ELECTRIC)<br>./. | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-01-1981 | GUIVOL |

EPA form 1503.1  06.78

Europäisches
Patentamt

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | * Figur 1 * | | |
| | -- | | |
| A | US - A - 3 810 119 (ZIEVE) <br> * Spalte 1 bis Spalte 2, Zeile 21 * | 1,5 | |
| | -- | | |
| A | FR - A - 2 344 074 (SMITHS) <br> * Seite 1 bis Seite 3, Zeile 27 * | 1,5 | |
| | ---- | | RECHERCHIERTE SACHGEBIETE (Int. Cl.³) |